# EUROPÄISCHE PATENTANMELDUNG

(11) **EP 2 299 088 A2**
(43) Veröffentlichungstag der Anmeldung: **23.03.2011**
(21) Anmeldenummer: 10173798.9
(22) Anmeldetag: 24.08.2010
(51) Int. Cl.: F02B 63/04

(54) **Antriebskombination zur Erzeugung von elektrischer Energie und Wärme**

(30) Priorität: 24.08.2009 DE 102009038870
(71) Anmelder: Golle Motor GmbH, 01069 Dresden (DE)
(72) Erfinder: Golle, Hermann, 01219, Dresden (DE)
(74) Vertreter: Lippert, Stachow & Partner

(57) **Zusammenfassung**

Für eine Antriebskombination zur Erzeugung von Strom und Wärme besteht die technische Aufgabe darin, das aus Motor und Generator bestehende Aggregat leistungsfähig, mit geringen Kosten und kleinen Abmessungen, sowie im Falle der Elektromobilität mit geringem Gewicht auszuführen.

Die Lösung besteht in der direkten Koppelung von Motor und Generator derart, dass an eine, an einer Generatorwelle (2) angeordneten Stirnkurbel (4) das Pleuel (5) angelenkt ist und Motorgehäuse (3) und Generatorgehäuse (1) eine direkt gekoppelte, aber lösbare Einheit bilden.

Das Anwendungsgebiet der Erfindung betrifft alle Systeme zur Erzeugung von Strom und Wärme, insbes. Blockheizkraftwerke und Range Extender für elektrisch betriebene Fahrzeuge aller Art.

## Beschreibung

Die Erfindung betrifft eine Kombination aus einem Kolbenmotor und einem elektrischen Generator, wie sie für Blockheizkraftwerke und andere stationäre oder mobile Strom-und Wärmeerzeuger, z. B. auch für sogenannte Range Extender in elektrisch betriebenen Fahrzeugen, zum Einsatz kommt.

Solche Motor-Generator-Kombinationen sind in vielen Ausführungen bereits bekannt. So beschreibt die DE 295 13 958 die klassische Bauart solcher Aggregate, indem Motor und Generator für sich eigenständige Maschinen und durch eine Kupplung miteinander verbunden sind. Auch die DE 10 2005 061 165 Al, die DE 44 08 719 Cl, die DE 103 39 564 Al und eine Reihe weiterer Erfindungen sind auf diese Weise aufgebaut, derart, dass beide Maschinen jeweils eigene Gehäuse und Auflagerungen ihrer rotierenden Elemente besitzen.

In weiteren Erfindungsvorschlägen werden z. B. KFZ-Schwungräder mit eingebauten Kupplungen und Elektromaschinen beschrieben (DE 197 04 786 Cl, DE 101 52 748 Al) oder besondere Getriebe zwischen dem Motor und dem Generator angeordnet, um die Übersetzungsverhältnisse zu verändern (DE 10 2008 017 142 Al).

In weiteren bekannten Ausführungen werden das Motor-Generator-Aggregat in einem allseitig mit Wasser gefüllten Gehäuse gehalten (DE 94 05 466) oder besonders gestaltete Umhausungen des Aggregates beschrieben (DE 35 11 123 C2). Der Erfindung liegt die Aufgabe zugrunde, für stationäre und mobile Anwendungen eine preiswerte und stabile, aber auch leichte und raumsparende (für die mobilen Anwendungen) Antriebskombination zu schaffen.

Diese Aufgabe wird erfindungsgemäß dadurch gelöst, dass die Generatorwelle zugleich die Kurbelwelle des Kolbenmotors darstellt, derart, dass die Pleuelstange des Motors an eine mit der Generatorwelle fest verbundene Stirnkurbel angelenkt ist.

Der Motor kann dabei in der einfachsten Form und für kleine Leistungen als 1-Zylinder-Otto- oder Dieselmotor ausgeführt sein.

Er kann aber auch als mehrzylindriger Motor in V-oder Sternbauart, als Boxermotor oder Gegenkolbenmotor, oder auch Heißluftmotor mit dem Generator in der vorstehend beschriebenen Weise verbunden werden.

Das Motorgehäuse ist durch leicht lösbare Verbindungen (Schrauben, Klemmstücke) an das Generatorgehäuse angeflanscht und somit leicht austauschbar.
Im Falle eines mehrzylindrigen Motors kann dabei ein Hilfslager an der dem Generator gegenüber liegenden Seite der Kombination die Aufnahme der Lagerkräfte unterstützen. Zweckmäßigerweise ist dieses Hilfslager in einem vom Motorgehäuse lösbaren Deckel angeordnet.

Die Erfindung wird nachfolgend an mehreren Ausführungsbeispielen dargestellt, wobei weitere erfindungsgemäße Merkmale in den Zeichnungen angegeben sind.

Es zeigen:
- Fig. 1: einen Längsschnitt durch die Antriebskombination,
- Fig. 2: einen Schnitt nach Linie I-I in Fig. 1,
- Fig. 3: eine stirnseitige Ansicht mit einem V-Motor,
- Fig. 4: einen Längsschnitt nach der Linie II-II in Fig. 3.

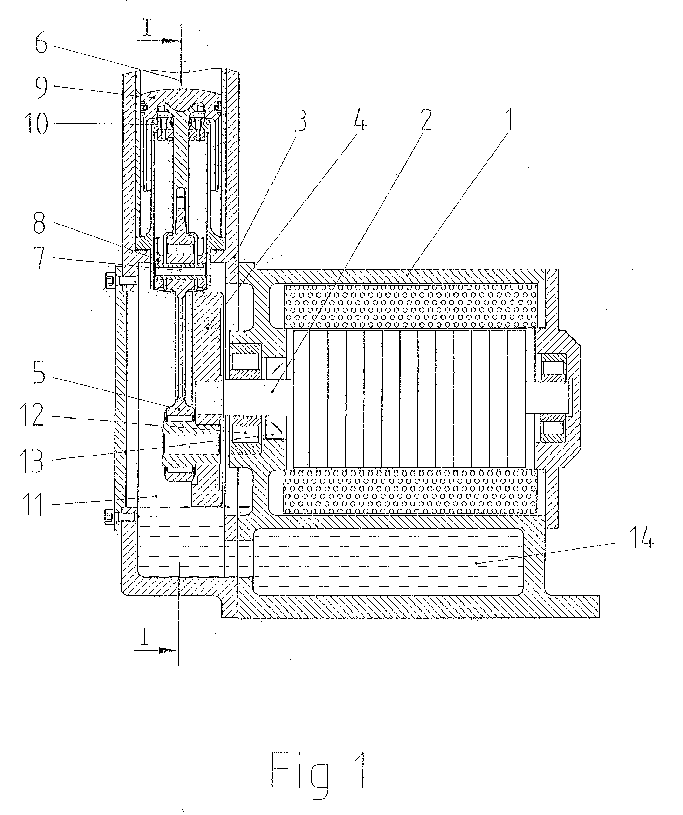

Die Fig. 1 zeigt ein Generatorgehäuse 1, in welchem die Generatorwelle 2 beidseitig gelagert ist. Das Motorgehäuse 3 ist am Generatorgehäuse 1 leicht lösbar, aber fest angeflanscht. Die Generatorwelle 2 trägt am motorseitigen Ende eine Stirnkurbel 4, an welcher das Pleuel 5 direkt angelenkt ist. Dieses Pleuel 5 ist Bestandteil des eigentlichen Motorkörpers 6, der als Kolbenmotor in der verschiedensten Bauart mit innerer oder äußerer Verbrennung ausgeführt sein kann. Im Beispiel ist das Triebwerk 7 dieses Motorkörpers dargestellt. Das nicht dargestellte obere, den Gaswechel steuernde Teil (Zylinderkopf) kann, wie bereits erwähnt, nach dem Zweitakt- oder Viertaktverfahren oder nach dem Heißluftprinzip (Stirlingmotor) ausgeführt sein.

Eine bevorzugte Ausführung des Triebwerks 7 ist die dargestellte Bauart mit Kreuzkopf 8 und ölfrei laufender Kolben/Zylinder-Gruppe nach DE 10 2006 015 645 Al und DE 10 2009 017 609.8. Diese besondere Bauart vermeidet alle Schadstoffemissionen aus dem mitabbrennenden Ölfilm, die bis zu 30 % betragen können. Zugleich erfolgt mittels einer Stangendichtung 10 eine öl- und gasdichte Trennung zwischen der Kolben/Zylinder-Gruppe 9 und dem Triebwerksraum 11, so dass keine Blowby-Gase in den Triebwerksraum 11 eintreten können.

Das dort befindliche, zur Schmierung aller Triebwerksteile dienende Schmieröl wird also weder verbraucht noch verschmutzt, so dass auch bei langen Betriebszeiten kein Ölverbrauch eintritt und kein Ölwechsel erforderlich ist. Das stark belastete, an der Stirnkurbel 4 befindliche Wälzlager 12 der Generatorwelle 2 ist in diesem Schmierprozess einbezogen, derart, dass die Wellendichtung 13 auf der dem Generator zugewandten Seite angeordnet ist. Das Generatorgehäuse 1 ist in seinem unteren Teil als Hohlkörper 14 ausgebildet und dem Triebwerksraum 11 verbunden, so dass es zusammen mit letzterem als Schmierölreservoir dient. Hier nicht dargestellte, im Hohlkörper 14 angeordnete Kühlschlangen können zur Abführung von unzulässig hoher Wärme im Schmieröl dienen.

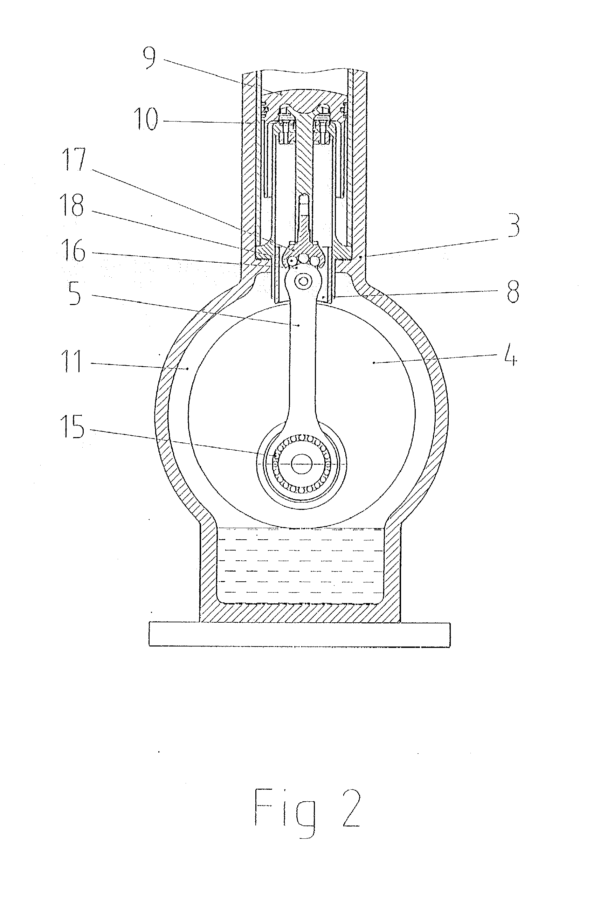

Die Fig. 2 zeigt im Querschnitt das Motorgehäuse 3 mit der Stirnkurbel 4 und dem Pleuel 5. Die ölfrei laufenden Kolben/Zylinder-Gruppe 9 ist durch die Stangendichtung 10 hermetisch vom Triebwerksraum 11 abgetrennt. Die Schmierung des gesamten Triebwerks erfolgt durch leichtes Berühren der Stirnkurbel 4 am Spiegel der Ölfüllung, so dass durch Schleuderschmierung die Pleuellager 15 und 16, der Kreuzkopf 8 und das Wälzlager 12 (Fig. 1) ausreichend geschmiert werden. Mit besonderen erfindungsgemäßen Mitteln ist dabei das obere Pleuellager 16 ausgeführt, indem in einem Lagerkopf 17 mehrere Rollenkörper 18 gehalten sind, die mit der verschleißfest gestalteten Außenkontur des Pleuels 5 zusammen arbeiten.

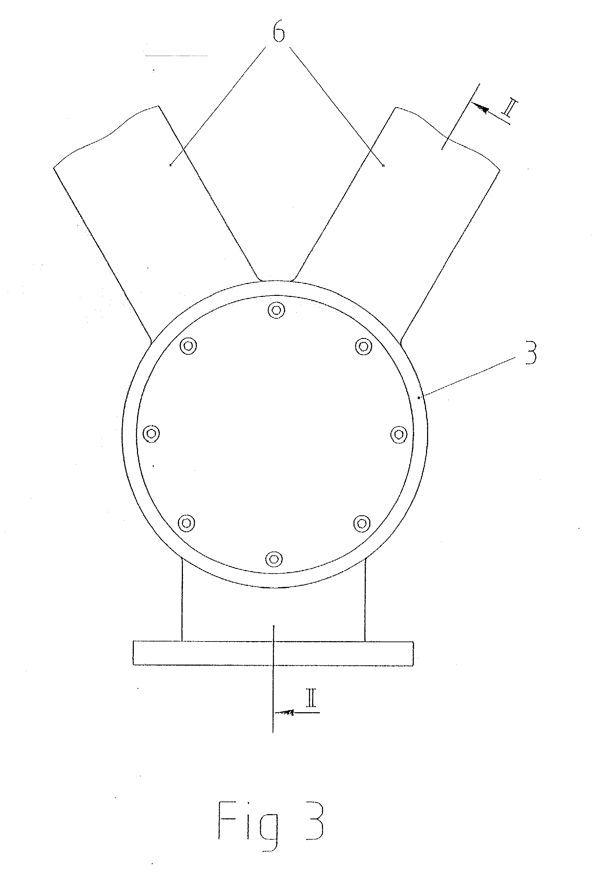

Die Fig. 3 zeigt die Antriebskombination beispielsweise mit einem V-Motor in der stirnseitigen Ansicht.

Das Motorgehäuse 3 besitzt hier zwei Motorkörper 6, die in einem Winkel zueinander stehen und auf ein gemeinsames Triebwerk arbeiten.

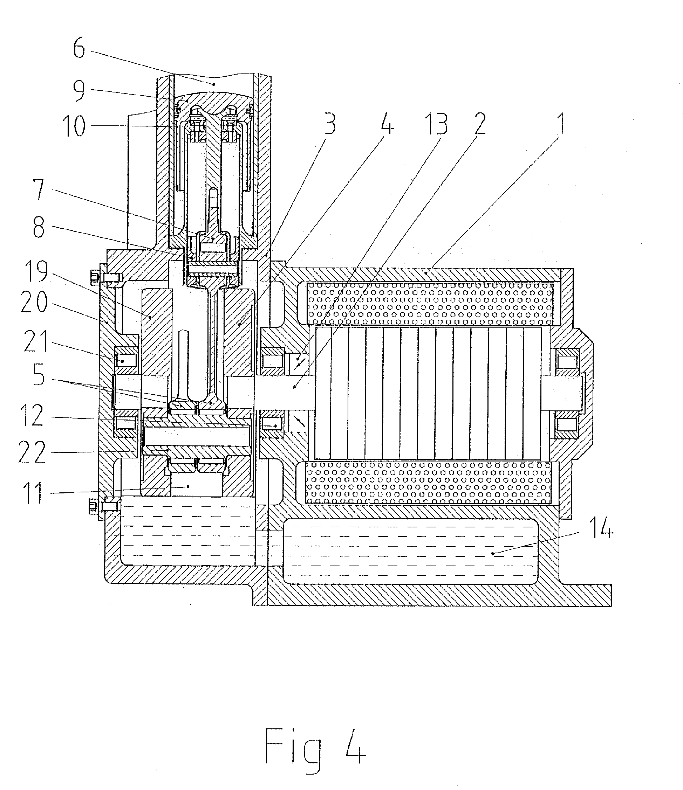

Dieses ist in der Fig. 4 dargestellt. Die Stirnkurbel 4 ist hier mit Hilfe der Hubscheibe 19 zu einer einhübigen Kurbelwelle ausgebildet. Diese ist im Gehäusedeckel 20 über ein zweites Wälzlager 21 abgestützt.

Die beiden Pleuel 5 sind, wie bei solchen mehrzylindrigen Motoren üblich, an dem gemeinsamen Hubzapfen 22 der einhübigen Kurbelwelle angelenkt.

Diese Bauart mit der Hubscheibe 19 und dem zweiten Wälzlager 21 kann natürlich auch im Falle eines einzylindrigen Motors angewandt werden. Dabei kann das zweite Wälzlager 21 auch schwächer dimensioniert, also als Hilfslager ausgeführt sein.

Die Erfindung beschreibt ein innovatives Produkt, welches für alle Einsatzfälle zur Erzeugung von elektrischem Strom und Wärme, insbesondere Blockheizkraftwerke und Elektromobilität, schadstoff- und wartungsarm eingesetzt werden kann.

In Betracht gezogene Druckschriften
DE 295 13 958 Cl
DE 10 2005 061 165 Al
DE 44 08 719 Cl
DE 103 39 564 Al
DE 197 04 786 Cl
DE 101 52 748 Al
DE 10 2008 017 142 A1
DE 94 05 466 Cl
DE 35 11 123 C2

### Antriebskombination zur Erzeugung von elektrischer Energie und Wärme

### Bezugszeichenliste

- 1: Generatorgehäuse
- 2: Generatorwelle
- 3: Motorgehäuse
- 4: Stirnkurbel
- 5: Pleuel
- 6: Motorkörper
- 7: Triebwerk
- 8: Kreuzkopf
- 9: Kolben/Zylinder-Gruppe
- 10: Stangendichtung
- 11: Triebwerksraum
- 12,21: Wälzlager
- 13: Wellendichtung
- 14: Hohlkörper
- 15: unteres Pleuellager
- 16: oberes Pleuellager
- 17: Lagerkopf
- 18: Rollenkörper
- 19: Hubscheibe
- 20: Gehäusedeckel
- 22: Hubzapfen

## Patentansprüche

1. Antriebskombination zur Erzeugung von elektrischer Energie und Wärme, wobei ein Kolbenmotor und ein Generator miteinander gekoppelt sind, **dadurch gekennzeichnet, dass** an eine Stirnkurbel (4), die Bestandteil einer Generatorwelle (2) ist, eine Pleuelstange (5) eines Motorkörpers (6) direkt angelenkt ist, derart, dass die Generatorwelle (2) die Kurbelwelle des Motorkörpers (6) bildet.

2. Antriebskombination nach Anspruch 1,
**dadurch gekennzeichnet, dass** das Motorgehäuse (3) fest, aber leicht lösbar an das Generatorgehäuse (1) direkt angeflanscht ist.

3. Antriebskombination nach Anspruch 1 und 2,
**dadurch gekennzeichnet, dass** das Motorgehäuse (3) und die Motorkörper (6) in Gestalt eines V-, Stern-Boxer-oder Gegenkolbenmotors ausgeführt sind.

4. Antriebskombination nach Anspruch 1 bis 3,
**dadurch gekennzeichnet, dass** ein zwischen Generatorgehäuse (1) und Motorgehäuse (3) befindliches Wälzlager (12) dem Motorgehäuse (3) und Triebwerk (7) zugehört, derart, dass eine Wellendichtung (13) generatorseitig angeordnet ist.

5. Antriebskolllbination nach Anspruch 1 bis 4,
**dadurch gekennzeichnet, dass** das obere Pleuellager (16) in Gestalt eines mit mehreren Rollenkörpern (18) versehenen Lagerkopfes (17) ausgeführt ist, welcher mit der verschleißfesten Außenkontur des Pleuels (5) zusammenarbeitet.

6. Antriebskombination nach Anspruch 1 bis 5,
**dadurch gekennzeichnet, dass** die Stirnkurbel (4) mit einer Hubscheibe (19), einem Hubzapfen (22) und einem Wälzlager (21) eine einhübige Kurbelwelle zur Anlenkung der Pleuel (5) bildet.

7. Antriebskombination nach Anspruch 1 bis 6,
**dadurch gekennzeichnet, dass** das Wälzlager (21) in einem mit dem Motorgehäuse (3) fest verbundenen, aber lösbaren Gehäusedeckel (20) angeordnet ist.

8. Antriebskombination nach Anspruch 1 bis 7,
**dadurch gekennzeichnet, dass** der Triebwerksraum (11) und der Hohlkörper (14) des Generatorgehäuses (1) durch Öffnungen miteinander verbunden sind und als Schmierölreservoir dienen.

9. Antriebskombination nach Anspruch 1 bis 8,
**dadurch gekennzeichnet, dass** die Schmierung aller Triebwerksteile (4, 5, 8, 1 2, 15, 16, 21) durch Berühren der Stirnkurbel (4) bzw. der Hubscheibe mit dem Ölspiegel erfolgt.
